# EUROPÄISCHE PATENTSCHRIFT

(11) **EP 0 638 746 B1**
(45) Veröffentlichungstag und Bekanntmachung des Hinweises auf die Patenterteilung: **10.06.1998**
(21) Anmeldenummer: 94110583.5
(22) Anmeldetag: 07.07.1994
(51) Int. Cl.: F16K 17/10

(54) **Vorsteuerstufe für Druckbegrenzungsventile**
Pilot stage for a pressure control valve
Etage piloté pour une soupape limitant la pression

(30) Priorität: 02.08.1993 LU 88390
(43) Veröffentlichungstag der Anmeldung: 15.02.1995
(73) Patentinhaber: HYDROLUX S.A.R.L., 1112 Luxembourg (LU)
(72) Erfinder: Bourkel, Arsène, L-4460 Belvaux (LU); Lanfermann, Bernd, D-46459 Rees (DE); Tratberger, Karl, D-47229 Duisburg (DE); Post, Karl-Heinz, D-41564 Kaarst (DE)
(74) Vertreter: Freylinger, Ernest T.

(56) Entgegenhaltungen:
- DE-A- 3 045 360
- FR-A- 2 649 178
- GB-A- 2 102 157
- US-A- 2 498 542
- US-A- 3 972 345
- US-A- 4 351 356

## Beschreibung

Die Erfindung betrifft eine Vorsteuerstufe für Druckbegrenzungsventile. Sie betrifft insbesondere eine solche Vorsteuerstufe mit einer Ventilkammer die mit einer ersten Steuerleitung verbunden ist, einem Schliesselement das formschlüssig in den Ventilsitz einpassbar ist und in der Ventilkammer axial verschiebbar ist, und einer Druckeinstellfeder die dem Schliesselement derart zugeordnet ist, dass sie auf letzteres eine Schliesskraft in Richtung des Ventilsitzes ausübt.

In Hydrosystemen haben Druckbegrenzungsventile die Aufgabe, den Systemdruck auf eine bestimmte vorgegebene Druckhöhe zu begrenzen. Wird dieser vorgegebene Wert erreicht, so spricht das Druckbegrenzungsventil an und leitet den überschüssigen Volumenstrom (d.h. den Differenzstrom zwischen Pumpen- und Verbraucherstrom) zum Tank zurück. Bei grösserem Volumenstrom werden die Druckbegrenzungsventile mit Vorsteuerstufen versehen. Druckbegrenzungsventile mit Vorsteuerstufen sind z.B. in der GB-A-2102157 und der FR-A-2649178 beschrieben.

Es sind Vorsteuerstufen der eingangs beschriebenen Art mit manueller Einstellvorrichtung der Druckeinstellfeder bekannt. Durch Kombination mit einem ansteuerbaren Wegeventil hat man bei diesen Ventilen die Möglichkeit, mittels Steuersignal von der Druckbegrenzungsfunktion auf drucklosen Umlauf zu schalten. Diese Umschaltung erfolgt dabei durch hydraulische Kurzschaltung des Vorsteuerstufe über das Wegeventil. Ein zu schnelles Ansprechen der Hauptstufe auf diese Kurzschaltung kann jedoch mit unerwünschten Druckstössen im Hydrosystem verbunden sein.

Es sind ebenfalls Vorsteuerstufen der eingangs beschriebenen Art mit Proportional-Magneten zur Druckeinstellung bekannt. Bedingt durch die begrenzte Magnetkraft ist der freie Querschnitt des Ventilsitzes in der Vorsteuerstufe, im Vergleich zu von Hand einstellbaren Vorsteuerstufen, relativ klein eingestellt. Dieser kleine Ventilsitzquerschnitt der Vorsteurstufe bewirkt ein relativ starkes Ansteigen des Drucks im Hydrosystem bei steigendem Volumenstrom durch die Hauptstufe, was natürlich nicht erwünscht ist. In Proportional-Druckbegrenzungsventilen wird zur Absicherung des Hydrosystems gegen unzulässig hohe Ströme am Proportional-Magneten, die zwangsläufig unzulässig hohe Drücke im Hydrosystem bewirken, zusätzlich ein federbelastetes, von Hand einstellbares Druckbegrenzungsventil als Maximal-Druckabsicherung eingebaut. Dieses zusätzliche Druckbegrenzungsventil bedingt natürlich zusätzliche Kosten und zusätzlichen Platzaufwand.

Der Erfindung liegt die Aufgabe zugrunde, eine Vorsteuerstufe zu schaffen die sowohl in von Hand einstellbaren vorgesteuerten Druckbegrenzungsventilen, als auch in vorgesteuerten Proportional-Druckbegrenzungsventilen verbesserte Eigenschaften aufweist.

Diese Aufgabe wird erfindungsgemäss durch eine Vorsteuerstufe der in der Präambel von Anspruch 1 beschriebenen Art gelöst, die durch folgende Merkmale gekennzeichnet ist:
einen axial verschiebbaren Ventilkolben der die Ventilkammer axial einseitig begrenzt und den Ventilsitz darin ausbildet, wobei letzterer über einen Verbindungskanal durch den Ventilkolben mit einer zweiten Steuerleitung verbunden ist,
eine Druckkammer die mit einer dritten Steuerleitung verbunden ist und in welcher der Ventilkolben eine Betätigungsfläche ausbildet die wesentlich grösser als der freie Querschnitt des Ventilsitzes ist, wobei diese Betätigungsfläche derart ausgebildet ist, dass durch Druckbeaufschlagung der Druckkammer eine hydrostatische Kraft auf den Ventilkolben ausgeübt wird die der Schliesskraft der Druckeinstellfeder entgegengesetzt ist, und
einen Gehäuseanschlag für den Ventilkolben der eine erste axiale Endstellung des Ventilkolbens in Richtung dieser hydrostatischen Kraft festlegt.

Durch den verschiebbaren Ventilsitz besitzt die erfindungsgemässe Vorsteuerstufe den Vorteil, dass die Vorspannung der Druckeinstellfeder durch Druckbeaufschlagung, respektiv Druckentlastung, der Druckkammer über die dritte Steuerleitung stufenlos zwischen einem Mininalwert und einem Maximalwert verstellt werden kann. Der Maximalwert entspricht dabei der Vorspannung der Druckeinstellfeder wenn der Ventilkolben in seiner ersten axialen Endstellung am Gehäuseanschlag anliegt. Selbst bei stark überhöhtem Druck in der Druckkammer kann somit dieser einstellbarer Maximalwert nicht überschritten werden. Der freie Querschnitt des Ventilsitzes kann bei der erfindungsgemässen Vorsteuerstufe, ohne funktionelle Nachteile, gleich gross wie bei bekannten, von Hand einstellbaren Vorsteuerstufen sein. Durch den bedeutenden Grössenunterschied zwischen der Betätigungsfläche des Ventilkolbens in der Druckkammer einerseits, und dem freien Querschnitt des Ventilsitzes anderseits, erzeugt:
a) ein niedriger Druck in der Druckkammer eine bedeutende Kraft zur Erhöhung der Vorspannung der Druckeinstellfeder,
b) ein hoher Steuerdruck im Ventilsitz eine niedrige Druckerhöhung zum Entleeren der Druckkammer über die dritte Steuerleitung.

Das Schliesselement ist vorzugsweise ein Schliesskegel. Dieser ist dann vorteilhaft mit einem Dämpfungskolben starr verbunden, der in einer Führungsbohrung des Ventilkolbens axial geführt ist. In dieser Ausführung ist eine einwandfreie axiale Führung des Schliesskegels gewährleistet, und eine zusätzliche Dämpfung der Öffnungs- und Schliessbewegungen des Schliesskegels wird erreicht.

Der Ventilkolben ist vorzugsweise in einer Führungsbohrung einer Ventilhülse verschiebbar angeordnet und weist einen ersten und zweiten, in der Führungsbohrung axial abgedichteten, Querschnittsbereich auf. Letztere grenzen innerhalb der Führungsbohrung eine innere Ringkammer ab, in die der Verbindungskanal zum Ventilsitz einmündet. Über Verbindungsöffnungen in der Ventilhülse und eine äussere, die Ventilhülse umgebende Ringkammer, ist die innere Ringkammer mit der zweiten Steuerleitung verbunden.

Die erfindungsgemässe Vorsteuerstufe kann z.B. in Form einer Zwischenplatte ausgeführt oder direkt in ein gemeinsames Gehäuse mit der Hauptstufe integriert sein.

Zur Verwirklichung der vorliegenden erfinderischen Idee wird ebenfalls ein vorgesteuertes, von Hand einstellbares Druckbegrenzungsventil vorgeschlagen, das mittels Steuersignal auf Druckentlastung geschaltet werden kann, ohne dabei Druckstösse im Hydrosystem hervorzurufen.

Dieses vorgesteuerte, von Hand einstellbares Druckbegrenzungsventil umfasst dabei:
eine Hauptstufe welche einen ersten und zweiten Hauptstromanschluss und eine Steuerkammer aufweist, wobei der erste Hauptstromanschluss mit einem Hydrosystem verbunden ist, und der zweite Hauptstromanschluss über eine Entlastungsleitung mit einem Tank drucklos verbunden ist,
eine erfindungsgemässe Vorsteuerstufe, mit einer manuellen Einstellvorrichtung der Druckeinstellfeder, wobei der erste Steueranschluss drucklos mit dem Tank verbunden ist, und der zweite Steueranschluss mit dem Hydrosystem und der Steuerkammer der Hauptstufe verbunden ist, und
ein durch ein Steuersignal ansteuerbares Wegeventil, das mit der dritten Steuerleitung verbunden ist und eine erste und zweite Schaltstellung aufweist, wobei in der ersten Schaltstellung die Druckkammer des Vorsteuerventils, über das Wegeventil und eine Steuer-Druckleitung, mit dem Druck im Hydrosystem beaufschlagbar ist, und in der zweiten Schaltstellung die Druckkammer, über das Wegeventil und eine Steuer-Tankleitung, drucklos mit dem Tank verbindbar ist.

Mit diesem Druckbegrenzungsventil kann ein langsames Ansprechen der Hauptstufe auf das Steuersignal zur Druckentlastung gewährleistet werden, so dass keine störenden Druckstösse bei Druckentlastung des Hydrosystems auftreten.

Vorteilhaft wird in die Steuer-Tankleitung eine Ablaufdüse eingesetzt. Durch diese Ablaufdüse lässt sich das zeitliche Ansprechen der Hauptstufe auf das Steuersignal zur Druckentlastung. Der zeitliche Verlauf der Druckentlastungsphase im Hydrosystem kann demnach den Erfordernissen angepasst werden, ohne dass dabei der freie Düsenquerschnitt unvertretbar klein ausgelegt werden muss.

In die Steuer-Druckleitung wird vorteilhaft eine Zulaufdüse eingesetzt. Durch diese Zulaufdüse lässt sich der zeitliche Verlauf der Druckaufbauphase im Hydrosystem, unabhängig von dem zeitlichen Verlauf der Druckentlastung, den Erfordernissen anpassen.

Zur Verwirklichung der vorliegenden erfinderischen Idee wird ebenfalls ein vorgesteuertes Proportional-Druckbegrenzungsventil vorgeschlagen, welches ein ausgezeichnetes Ventilverhalten und eine integrierte mechanische Sicherheit gegen Maximaldruck-Überschreitungen aufweist.

Dieses vorgesteuerte Proportional-Druckbegrenzungsventil umfasst dabei:
eine Hauptstufe welche einen ersten und zweiten Hauptstromanschluss und eine Steuerkammer aufweist, wobei der erste Hauptstromanschluss mit einem Hydrosystem verbunden ist, und der zweite Hauptstromanschluss über eine Entlastungsleitung mit einem Tank drucklos verbunden ist,
eine erfindungsgemässe Vorsteuerstufe, mit einer manuellen Einstellvorrichtung der Druckeinstellfeder, wobei der erste Steueranschluss drucklos mit dem Tank verbunden ist und der zweite Steueranschluss mit dem Hydrosystem und der Steuerkammer der Hauptstufe verbunden ist, und
ein proportionales Druckregelventil mit einem (P)-Anschluss, (T)-Anschluss, und (B)-Anschluss, wobei der (P)-Anschluss mittels einer Steuer-Druckleitung mit dem Hydrosystem verbunden ist, der (T)-Anschluss mittels einer Steuer-Tankleitung mit dem Tank verbunden ist, der (B)-Anschluss mit dem dritten Steueranschluss der erfindungsgemässen Vorsteuerstufe verbunden ist, und somit die Druckkammer der Vorsteuerstufe mit einem zu einem Steuerstrom proportionalem Druck beaufschlagbar ist.

Durch den relativ grossen freien Querschnitt des Ventilsitzes in der erfindungsgemässen Vorsteuerstufe ist der sich im Verbindungskanal zum Ventilsitz einstellende Steuerdruck relativ unabhängig vom Steueröldurchfluss durch diese Vorsteuerstufe. Damit wird der im Hydrosystem über die Hauptstufe eingeregelte Druck ebenfalls weitaus unabhängiger vom Durchfluss durch die Hauptstufe. Das proportionale Druckregelventil arbeitet dabei im Niederdruckbereich.

Soll eine sehr genaue Druckeinstellung des vorgesteuerten Proportional-Druckbegrenzungsventils erreicht werden, ist die erfinderische Vorsteuerstufe vorteilhaft mit einem Wegaufnehmer für die Position des Ventilkolbens ausgestattet. Diese Position des Ventilkolbens wird dann in einem geschlossenen Positionsregelkreis proportional zu einem vorgegebenen Sollwertsignal eingestellt, und damit die Vorspannung der Druckeinstellfeder exakt eingeregelt.

Weitere Vorteile und Merkmale der Erfindung ergeben sich aus der nachfolgenden Beschreibung anhand der beigefügten Zeichnungen, welche unter anderem die Beschreibung eines Ausführungsbeispiels der Erfindung, mehrere Anwendungsbeispiele und eine vergleichende Beschreibung des Stands der Technik umfasst.

Es zeigen:
Figur 1, das hydrauliche Schema eines vorgesteuerten Druckbegrenzungsventils mit manueller Einstellung des Öffnungsdrucks und Umschaltmöglichkeit auf drucklosen Umlauf entsprechend dem Stand der Technik;
Figur 2, das hydraulische Schema eines Proportional-Druckbegrenzungsventils mit einer zusätzlichen Sicherheit gegen Maximaldruck-Überschreitungen entsprechend dem Stand der Technik;
Figur 3, einen Schnitt durch ein Ausführungsbeispiel der erfindungsgemässen Vorsteuerstufe;
Figur 4, einen vergrösserten Ausschnitt aus Figur 3;
Figur 5, die erfindungsgemässe Vorsteuerstufe nach Figur 3 und 4 in einem Druckbegrenzungsventil mit manueller Einstellung des Öffnungsdrucks und der Möglichkeit zur Druckentlastung, respektiv zum Druckaufbau, mittels Steuersignal;
Figur 6, die erfindungsgemässe Vorsteuerstufe nach Figur 3 und 4 in einen Proportional-Druckbegrenzungsventil mit integrierter Sicherheit gegen Maximaldruck-Überschreitungen;
Figur 7, die erfindungsgemässe Vorsteuerstufe nach Figur 3 und 4 in einem Proportional-Druckbegrenzungsventil mit integrierter Sicherheit gegen Maximaldruck-Überschreitungen und geschlossenem Positionsregelkreis.

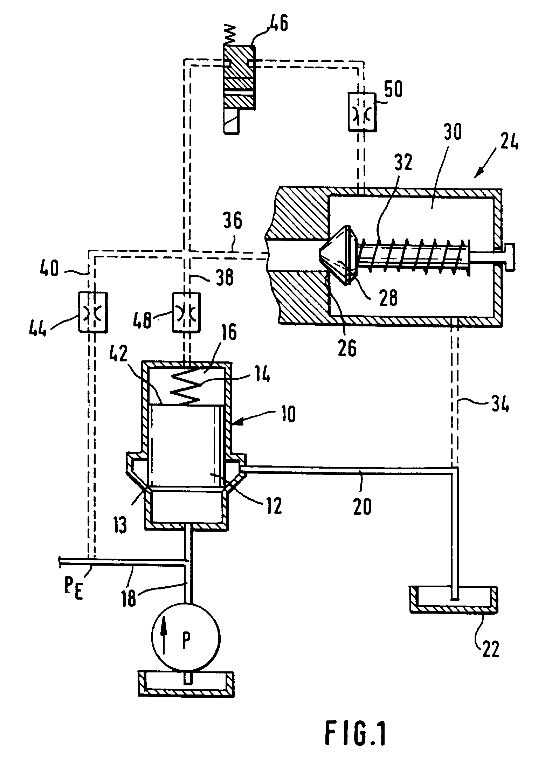

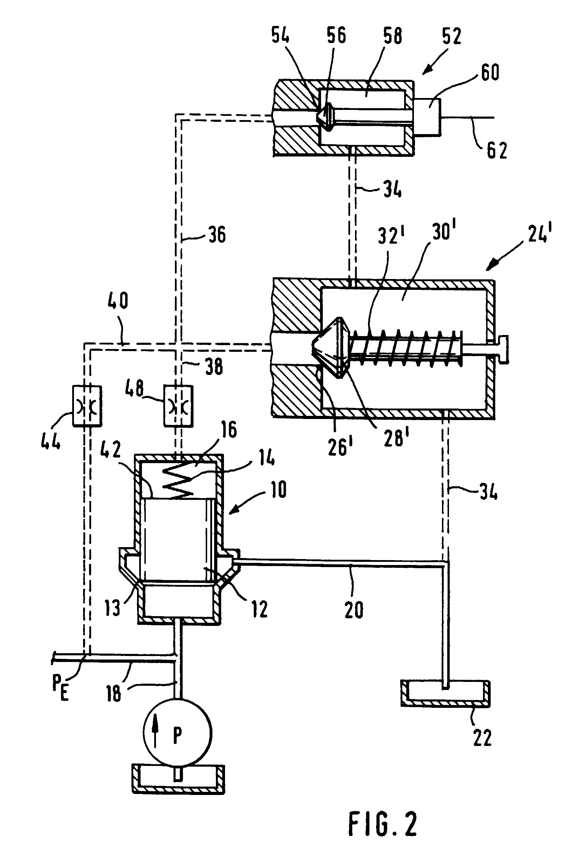

Anhand der Prinzipschemata der Figuren 1 und 2 werden, zwecks besseren Verständnis der vorliegenden Erfindung, wesentliche Nachteile und Probleme bei vorgesteuerten Druckbegrenzungsventilen entsprechend dem Stand der Technik einleitend kurz erläutert. In beiden Figuren ist ein Druckbegrenzungsventil 10 in Sitzbauweise, mit einem Hauptkolben 12, einem Hauptventilsitz 13, einer Hauptkolbenfeder 14 und einer Hauptsteuerkammer 16 dargestellt. Es ist Aufgabe des Druckbegrenzungsventils 10 ein Hydrosystem 18 gegen unzulässig hohe Drücke zu schützen und/oder einen eingestellten, vorgegebenen Druckwert konstant zu halten. Über das Druckbegrenzungsventil 10 ist dazu das Hydrosystem 18, mittels einer Entlastungsleitung 20, mit einem drucklosen Tank 22 verbunden.

Die Referenzzahl 24 zeigt ein Vorsteuerventil mit manueller Druckeinstellung. Es weist einen Ventilsitz 26 und ein Schliesselement (Schliesskegel 28) auf, wobei der Schliesskegel 28 formschlüssig in den Ventilsitz 26 einpassbar ist und in einer Ventilkammer 30 axial verschiebbar ist. Eine manuell einstellbare Druckeinstellfeder 32 ist dem Schliesskegel 28 derart zugeordnet, dass sie auf letzteren eine Schliesskraft in Richtung des Ventilsitzes 26 ausübt. Über eine erste Steuerleitung 34 ist die Ventilkammer 30 mit dem Tank 22 verbunden. Eine zweite Steuerleitung 36 mündet einerseits in den Ventilsitz 26 und ist anderseits über eine dritte Steuerleitung 38 mit der Hauptsteuerkammer 16 und über eine vierte Steuerleitung 40 mit dem Hydrosystem 18 hydraulisch verbunden.

Ist der Systemdruck p_{E} im Hydrosystem 18 niedriger als der an der Druckeinstellfeder 32 eingestellte Öffnungsdruck, so ist das Vorsteuerventil 24 geschlossen und die Hauptsteuerkammer 16 mit dem Systemdruck p_{E} beaufschlagt. Bildet der Hauptkolben 12 in der Hauptsteuerkammer 16 eine Hauptsteuerfläche 42 aus welche ungefähr dem freien Querschnitt seines Ventilsitzes 13 entspricht, so ist der Hauptkolben nun hydrostatisch im Gleichgewicht und wird über die Hauptkolbenfeder 14 dichtend in seinen Ventilsitz 13 gedrückt. Die Verbindung zwischen dem Hydrosystem 18 und dem Tank 22 über die Entlastungsleitung 20 ist damit unterbunden.

Übersteigt der Systemdruck p_{E} im Hydrosystem 18 den an der Druckeinstellfeder 32 eingestellten Öffnungsdruck, öffnet der Schliesskegel 28 gegen die Druckeinstellfeder 32 und ermöglicht einen Steuerölabfluss über die Ventilkammer 30 und die erste Steuerleitung 34 in den Tank 22. Ein Steuerölzufluss über die vierte Steuerleitung 40 vom Hydrosystem 18 wird über eine erste Düse 44 begrenzt. In der zweiten Steuerleitung 36 und der Hauptsteuerkammer 16 stellt sich ein weitgehend konstanter Steuerdruck ein. Steigt der Systemdruck p_{E} weiter an, so öffnet schlussendlich der Hauptkolben 12 und das Hydrosystem 18 wird über die Entlastungsleitung 20 mit dem Tank 22 verbunden, wodurch der Systemdruck begrenzt wird.

Damit das Hydrosystem 18 durch ein Steuersignal nach Bedarf drucklos über das Druckbegrenzungsventil zum Tank 22 entlastet werden kann, ist im Schema der Figur 1 zusätzlich ein elektromagnetisch betätigtes Wegeventil 46 (z.B. ein 2/2-Wegeventil mit Federrückstellung) vorgesehen. Dieses Wegeventil 46 ist hydraulisch parallel zum Vorsteuerventil 24 geschaltet. Bei elektromagnetischer Öffnung des Wegeventils 46 wird die Hauptsteuerkammer 16 über das Wegeventil 46 quasi drucklos zum Tank 22 entlastet, so dass durch Umgehung, d.h. Kurzschliessung, des Vorsteuerventils 24 dessen Druckeinstellung unwirksam wird. Da seine Hauptsteuerfläche 42 jetzt entlastet ist, öffnet der Hauptsteuerkolben 12. Er gibt damit den Durchfluss zur Entlastungsleitung 20 frei. Der sich einstellende Systemdruck ist von der Gegenkraft der Hauptkolbenfeder 14 und der im Vorsteuersystem angeordneten Düsen 44, 48, 50 abhängig. Selbstverständlich könnte auch ein stromlos offenes Wegeventil 46 zur Anwendung gelangen, falls eine stromlose Entlastung des Hydrosystems 18 gewünscht ist.

Die bekannte Druckentlastung des Hydrosystems 18 entsprechend dem Schema der Figur 1 ergibt jedoch ein wenig zufriedenstellendes Resultat. Der Hauptkolben 12 spricht nämlich abrupt auf die Kurzschliessung des Vorsteuerventils 24 an und öffnet innerhalb weniger Millisekunden, so dass in der Entlastungsleitung 20 ein Entlastungsschlag mit einem hohen, kurzzeitigen Durchflussimpuls auftritt. Solche Entlastungsschläge können, neben der Lärmbelästigung, zu Störungen in der Anlage, wie beispielsweise Beschädigung von Filtern, Kühlern, Dichtungen und Befestigungselementen, oder zu unerwünschten Schwingungen in den angeschlossenen Maschinen führen. Selbst durch den Einbau der Düse 48 in den Ausgang der Hauptsteuerkammer 16, respektiv der Düse 50 in die Tankleitung des Vorsteuerventils 24, ist in vielen Fällen nur eine ungenügende Verlangsamung der Öffnungsbewegung des Hauptkolbens 12 erreichbar. Die Düsen 48, 50 müssen nämlich einen minimalen freien Querschnitt aufweisen, damit ihr Zusetzen durch Schmutzpartikel ausgeschlossen ist.

In dem Schema nach Figur 2 ist das Druckbegrenzungs-Ventil 10 als vorgesteuertes Proportional-Druckbegrenzungsventil mit einer bekannten Sicherheitsschaltung gegen Maximaldruck-Überschreitungen eingesetzt. Die Referenzzahl 52 zeigt ein Vorsteuerventil welches, wie das Vorsteuerventil 24, einen Ventilsitz 54 und ein Schliesselement (Schliesskegel 56) aufweist. Der Schliesskegel 56 ist formschlüssig in den Ventilsitz 54 einpassbar und in einer Ventilkammer 58 axial verschiebbar. Anstelle der manuell verstellbaren Druckeinstellfeder 32 beim Vorsteuerventil 24, erzeugt beim Vorsteuerventil 52 ein elektrisch ansteuerbarer Proportional-Magnet 60 die Schliesskraft des Schliesskegels 56 proportional zu einem elektrischen Steuerstrom 62. Da die auf den Schliesskegel 56 wirkende Schliesskraft den Öffnungsdruck des Vorsteuerventils 52 und somit den Druck in der Hauptsteuerkammer 16 des Druckbegrenzungsventils 10 bestimmt, lässt sich der Druck p_{E} im Hydrosystem 18 weitgehend proportional zum elektrischen Steuerstrom 62 stufenlos regeln. In einer bekannten alternativen Ausführung wirkt der Proportional-Magnet 60 auf eine (nicht gezeigte) Druckfeder die auf den Schliesskegel 56 eine Schliesskraft in Richtung des Ventilsitzes 54 ausübt und steuert deren Vorspannung und damit den Druck p_{E} im Hydrosystem 18 stufenlos. Beide Ausführungen haben den Nachteil, dass wegen der begrenzten Betätigungskraft des Proportional-Magneten 60 (standardmässig ungefähr 60N bis 100N) der freie Querschnitt des Ventilsitzes 54 relativ klein ausgelegt werden muss. Man kann davon ausgehen, dass der freie Querschnitt des Ventilsitzes 54 zirka sieben- bis zehnmal kleiner als der freie Querschnitt des Ventilsitzes 26 im manuell einstellbaren Vorsteuerventil 24 ist. Dieser stark verkleinerte Strömungsquerschnitt des Ventilsitzes 54 führt natürlich zu parasitären Druckverlusten im Vorsteuerventil 52, wodurch der Druck in der Hauptsteuerkammer 16 weitaus abhängiger von Durchflusschwankungen in der Steuerleitung 40 wird. Durchflusschwankungen in Steuerleitung 40 sind z.B. dadurch zu erklären, dass bei ansteigendem Durchfluss durch das Druckbegrenzungsventil 10, die auf den Hauptkolben 12 in Schliessrichtung wirkenden Strömungskräfte grösser werden. Hierdurch steigt der Druck p_{E} im Hydrosystem an, was seinerseits ein Ansteigen des Durchflusses in der Steuerleitung 40 bewirkt. Das Resultat ist ein Ansteigen des Druckes p_{E} im Hydrosystem 18 mit ansteigendem Volumenstrom Q durch das Druckbegrenzungsventil 10. Die Steigung der charakteristischen Kennlinie (Q; p_{E}) des vorgesteuerten Druckbegrenzungsventils 10 ist desto ausgeprägter, je grösser der Druckverlust im Vorsteuerventil 52 ist. Es ist deshalb zu bedauern, dass durch Proportional-Magnete betätigte Vorsteuerventile generell einen kleineren freien Querschnitt ihres Ventilsitzes haben, als manuell einstellbare Vorsteuerventile.

Zur Absicherung des Hydrosystems 18 gegen zu hohe Drücke, welche z.B. durch eine fehlerhafte Ansteuerung des Proportional-Magneten 60 (zu hoher Steuerstrom 62) bewirkt werden, ist im Schema der Figur 2 ein manuell einstellbares Vorsteuerventil 24' parallel zum Vorsteuerventil 52 angeordnet. Dieses Vorsteuerventil 24' entspricht, mit seinem Ventilsitz 26', seinem Schliesskegel 28', seiner Ventilkammer 30' und seiner Druckeinstellfeder 32', funktions-und aufbaumässig dem Vorsteuerventil 24 der Figur 1. Seine Eingliederung in den Vorsteuerteil des Druckbegrenzungsventils 10 bedeutet natürlich einen zusätzlichen Kosten-und Platzaufwand.

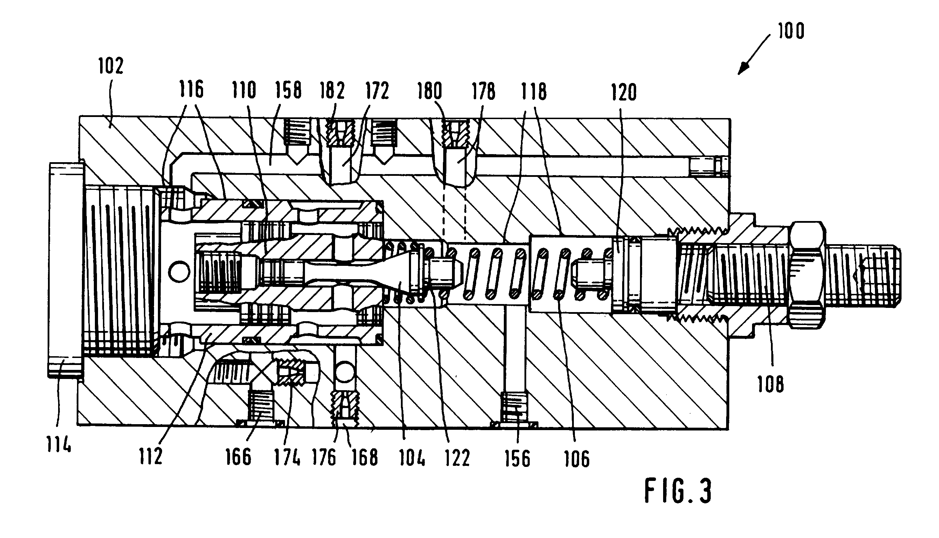

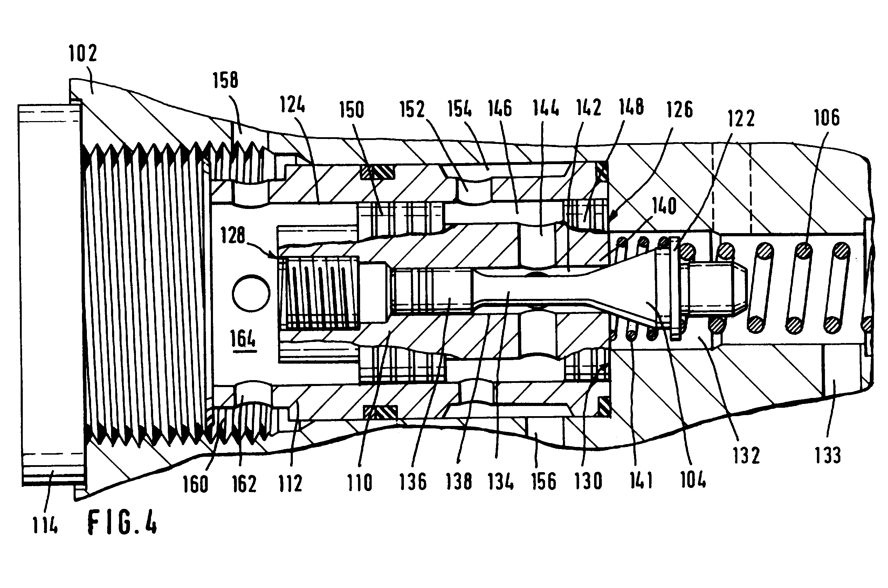

Anhand der Figuren 3 und 4 wird der Aufbau einer bevorzugten Ausführungsform des erfindungsgemässen Vorsteuerventils 100 beschrieben. Letzteres umfasst folgende Hauptelemente: ein Ventilgehäuse 102, ein Schliesselement wie z.B. ein Schliesskegel 104, eine Druckeinstellfeder 106, eine Einstellvorrichtung 108 für die Druckeinstellfeder 106, einen Ventilkolben 110, eine Ventilhülse 112 für den Ventilkolben 110.

Die Ventilhülse 112 ist in eine erste Stufenbohrung 116 des Ventilgehäuses 102 abgedichtet eingesetzt. Ein Verschlusstopfen 114 dichtet diese erste Stufenbohrung 116 axial ab und fixiert dabei gleichzeitig die Ventilhülse 112 darin. Eine zweite Stufenbohrung 118 verlängert die erste Stufenbohrung 116 axial durch das Ventilgehäuse 102 und weist dabei kleinere Querschnitte als die erste Stufenbohrung 116 auf. Diese zweite Stufenbohrung 118 wird axial von der Einstellvorrichtung 108 abgedichtet. Es handelt sich hierbei z.B. um einen klassischen, an sich bekannten, manuell betätigten Verstellmechanismus mit Schraubspindel. Die Druckeinstellfeder 106 stützt sich mit einem ersten Ende auf einen Federteller 120 der Einstellvorrichtung 108 und mit einem zweiten Ende auf eine Schulterfläche 122 des Schliesskegels 104 ab und übt demnach auf den Schliesskegel 104 eine, durch die Einstellvorrichtung 108 manuell einstellbare, Federkraft in Richtung der ersten Stufenbohrung 116 aus.

Der innere linke Teil des Vorsteuerventils 100 - betreffend insbesondere die Ventilhülse 112, den Ventilkolben 110 und den Schliesskegel 104 - wird anhand der Figur 4 näher beschrieben. Der Ventilkolben 110 ist innerhalb einer Führungsbohrung 124 der Ventilhülse 112 axial verschiebbar; und zwar zwischen einer ersten axialen Endposition, in welcher er mit seiner ersten Stirnfläche 126 an einer ringförmigen Schulterfläche 130 im Ventilgehäuse 102 anliegt, und einer zweiten axialen Endposition, in welcher er mit seiner zweiten Stirnfläche 128 gegen den Verschlusstopfen 114 anliegt. Die ringförmige Schulterfläche, die den Anschlag für die erste axiale Endposition bildet, egibt sich z.B. dadurch, dass eine in axialer Verlängerung der Führungsbohrung 124 angeordnete Ventilkammer 132 einen kleineren Querschnitt als die Führungsbohrung 124 aufweist. In Figur 4 befindet sich der Ventilkolben in seiner ersten axialen Endposition. In die Ventilkammer 132 mündet eine erste Steuerleitung 133.

Der Schliesskegel 104 ist vorteilhaft starr mit einem, an sich bekannten, Dämpfungskolben 134 verbunden. Dieser ist vorteilhaft durch einen Führungsansatz 136 an seinem freien Ende in einer Führungsbohrung 138 im Ventilkolben 110 axial geführt. Wie bekannt, muss der Dämpfungskolben 134 die Hydraulikflüssigkeit, z.B. über eine nicht gezeigte abgeflachte Fläche am Führungsansatz 136, verdrängen, so dass jeweils entgegen der Bewegungsrichtung des Schliesskegels 104 eine Dämpfungskraft entsteht. Das erste Ende der Führungsbohrung 138 (respektiv ihrer axiale Verlängerung) mündet axial an einem Ende in die erste Stirnfläche 126 des Ventilkolbens 110 und bildet darin den freien Querschnitt eines Ventilsitzes 140 aus, in dem der Schliesskegel 104 formschlüssig einpassbar ist. Selbstverständlich könnte z.B. auch ein kugel- oder tellerförmiges Schliesselement mit einem entsprechend angepassten Ventilsitz gewählt werden. Zwischen Schliesskegel 104 und erster Stirnfläche 126 des Ventilkolbens 110 ist vorteilhaft eine Öffnungsfeder 141 vorgesehen.

Am gegenüberliegenden Ende ist die Führungsbohrung 138 axial verschlossen. Da der Dämpfungskolben 134 zwischen seinem Führungsansatz 136 und dem Schliesskegel 104 einen wesentlich kleineren Querschnitt als die Führungsbohrung 138 aufweist, ist zwischen beiden eine Verbindungsleitung 142, mit einem ringförmigen Querschnitt, zum Ventilsitz 140 ausgebildet. Eine Querbohrung 144 im Ventilkolben 110 verbindet die Verbindungsleitung 142 mit einer inneren Ringkammer 146. Letztere wird innerhalb der Führungsborung 124 der Ventilhülse 112 zwischen einem ersten und zweiten Querschnittsbereich 148 und 150 des Ventilkolbens 110 axial abgedichtet begrenzt. Durch entsprechende Verbindungsöffnungen 152 in der Ventilhülse 112 ist die innere Ringkammer 146 über eine äussere Ringkammer 154, die zwischen Ventilhülse 112 und erster Stufenbohrung 116 angeordnet ist, mit einer zweiten Steuerleitung 156 verbunden.

Eine dritte Steuerleitung 158 ist über eine weitere äussere Ringkammer 160 und weitere Verbindungsöffnung 162 in der Ventilhülse 112 mit einer Druckkammer 164 verbunden. Diese Druckkammer 164 wird innerhalb der Führungsbohrung 124 der Ventilhülse 112 einerseits durch den Verschlussstopfen 114 und anderseits durch die zweite Stirnfläche 128 des Ventilkolbens 110 abgegrenzt. Letzterer weist somit in dieser Druckkammer 164 eine Druckbetätigungsfläche auf, deren Fläche dem Querschnitt der Führungsbohrung 124 entspricht. Es sei festgestellt, dass diese Fläche mehr als zehnmal grösser als der freie Querschnitt des Ventilsitzes 140 ist.

Die vorbeschriebene Ausführung könnte natürlich konstruktiv abgeändert werden, ohne dabei den Grundgedanken der Erfindung zu entfremden. So könnte z.B. der Dämpfungskolben 134 weggelassen werden und durch eine Führung des Schliesskegels 104 ausserhalb des Ventilkolbens 110 ersetzt werden. Die Ventilhülse 112 könnte ebenfalls entfallen. Die Verbindung zwischen zweiter Steuerleitung 156 und dem verschiebbaren Ventilsitz 140 könnte durch den Fachmann anders als vorbeschrieben gelöst werden. Alternative Lösungen betreffend die Ausführung der beiden Endanschläge für den Ventilkolben 110 sind für den Fachmann ebenfalls naheliegend.

Die Funktionsweise und wesentlichen Vorteile des in den Figuren 3 und 4 dargestellten Vorsteuerventils 100 werden anhand von drei Anwendungsbeispielen beschrieben.

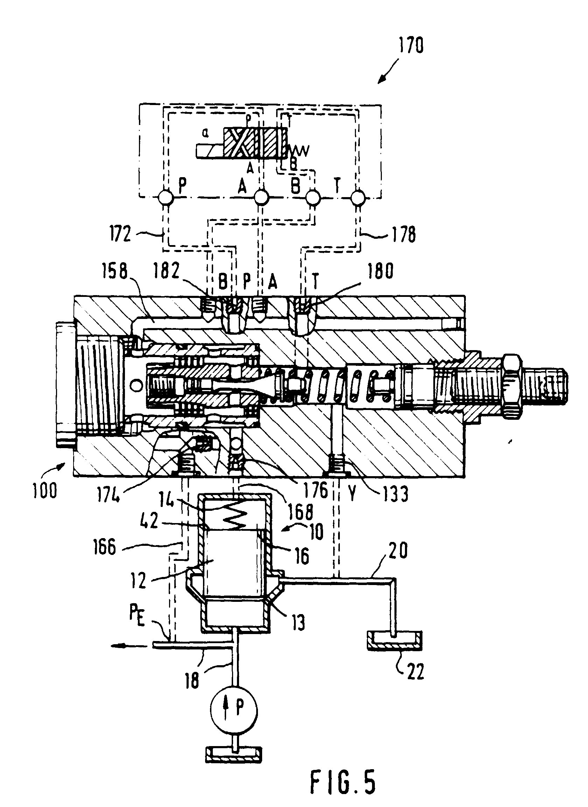

In den Anwendungsbeispielen der Figuren 5, 6 und 7 ist das erfindungsgemässe Vorsteuerventil 100 jeweils mit einem Druckbegrenzungsventil 10 als Hauptstufe eingesetzt. Zwecks Beschreibung der Hauptstufe wird auf die Figuren 1 und 2 verwiesen. Gleiche Elemente sind dabei mit gleichen Referenzzahlen versehen. Es sei darauf hingewiesen dass die Referenzzahlen, welche sich auf Teile des Vorsteuerventils 100 beziehen, in den Figuren 3 und 4 aufgeführt sind. Diese Referenzzahlen wurden nicht in die Figuren 5, 6 und 7 übernommen, um diese nicht zu überlasten. Die Figuren 3 und 4 sind demnach zwecks besseren Verständnisses der nachfolgenden Beschreibung ebenfalls hinzuzuziehen.

In dem Hydraulikschema nach Figur 5 bildet das Vorsteuerventil 100 mit dem Hauptstufenventil 10 ein vorgesteuertes Druckbegrenzungsventil, bei dem der Öffnungsdruck manuell eingestellt wird. Über die Einstellvorrichtung 108 wird dabei, durch Vorspannen der Druckeinstellfeder 106, die auf den Schliesskegel 104 wirkende Schliesskraft eingestellt. Die erste Steuerleitung 133 des Vorsteuerventils 100 ist drucklos mit dem Tank 22 verbunden. Die zweite Steuerleitung 156 des Vorsteuerventils 100 ist über einen Steueröldruckanschluss 166 mit dem Hydrosystem 18 verbunden, so dass der Schliesskegel 104 in seinem Ventilsitz 140 mit dem Systemdruck p_{E} beaufschlagt ist. Über einen Hauptsteuerkammer-Anschluss 168 ist die zweite Steuerleitung 156 ebenfalls mit der Hauptsteuerkammer 16 verbunden. Solange der Systemdruck p_{E} niedriger als der an der Einstellvorrichtung 108 eingestellte Öffnungsdruck ist, wird die Hauptsteuerkammer 16 über den Steueröldruck-Anschluss 166 und den Hauptsteuerkammer-Anschluss 168 mit dem Systemdruck p_{E} beaufschlagt. Bei Flächengleichheit zwischen Hauptsteuerfläche 42 und Querschnitt des Hauptventilsitzes 13, ist der Hauptkolben 12 jetzt hydrostatisch im Gleichgewicht und wird durch die Kolbenfeder 14 dichtend auf den Hauptventilsitz 13 gedrückt.

Die Referenzzahl 170 zeigt ein, durch sein grafisches Symbol (nach ISO 1219) dargestelltes, 4/2-Wegeventil mit elektromagnetischer Betätigung, vier Anschlüssen (A), (B), (P) und (T), zwei Schaltstellungen und einer durch Federkraft definierten Ausgangsstellung. In einer der beiden Schaltstellungen des Wegeventils 170 ist die Druckkammer 164 des Vorsteuerventils 100 über das Wegeventil 170 und eine Steuer-Druckleitung 172 durch das Ventilgehäuse 102 mit dem Steueröldruckanschluss 166 verbunden (im Ventilgehäuse 102 ist die Steuer-Druckleitung 172 nur teilweise dargestellt). Der Ventilkolben 110 des Vorsteuerventils 100 wird demnach mit hoher Kraft gegen die Schulterfläche 130 gedrückt.

Übersteigt der Systemdruck p_{E} im Hydrosystem 18 den eingestellten Öffnungsdruck, hebt der Schliesskegel 104 von dem Ventilsitz 140 ab. Dadurch fliesst ein, durch eine Zulaufdüse 174 im Steueröldruckanschluss 166 begrenzter, Steuerölstrom über den Ventilsitz 140 und die erste Steuerleitung 133 zum Tank 22 ab. Dadurch stellt sich in dem Verbindungskanal 142 zum Ventilsitz 140 ein weitgehend konstanter Steuerdruck ein. Dieser Steuerdruck p_{C} wirkt über den Hauptsteuerkammer-Anschluss 168 auf die Hauptsteuerfläche 42 des Hauptsteuerkolbens 12. Steigt der Systemdruck weiter an, so wird die auf den Hauptkolben in Öffnungsrichtung wirkende hydrostatische Kraft schlussendlich grösser als die in Schliessrichtung wirkende Federkraft der Hauptkolbenfeder 14. Der Hauptkolben 12 hebt nun von seinem Ventilsitz 13 ab und gibt den Durchfluss über die Entlastungsleitung 20 zum Tank 22 frei. Die Druckbegrenzung hat damit eingesetzt. Eine Dämpfungsdüse 176 in dem Hauptsteuerkammer-Anschluss 168 dämpft dabei die Bewegungen des Hauptkolbens 12. Die von der Stärke der Hauptkolbenfeder 14 bestimmte Druckdifferenz zwischen Systemdruck und Steuerdruck bestimmt mit dem Durchflussquerschnitt der Zulaufdüse 174 den Steueröldurchfluss durch das Vorsteuerventil 100. Selbstverständlich sollen die Zulaufdüse 174 und die Dämpfungsdüse 176 optimal aufeinander abgestimmt sein, damit sich ein stabiles Betriebsverhalten ohne Druckschwingungen und eine charakteristische Kennlinie (Q; p_{E}) mit geringem Anstieg des Systemdrucks p_{E} bei ansteigendem Durchfluss durch das Hauptventil 10 ergeben.

Bis jetzt unterscheidet sich die Funktionsweise des Vorsteuerventils 100 nicht wesentlich vom Vorsteuerventil 24 der Figur 1. Wesentliche Unterschiede ergeben sich jedoch bei der elektrisch betätigten Druckentlastung des Hydrosystems 18 über das Druckbegrenzungsventil 10 und die Entlastungsleitung 20 zum Tank 22.

Das 4/2-Wegeventil 170 ist über seine zwei Arbeitsanschlüsse (A) und (B) mit der dritten Steuerleitung 158 verbunden. Soll die Druckentlastung bei stromlosem Wegeventil 170 erfolgen, ist die Verbindung mit dem Arbeitsanschluss (A), wie in Figur 5 gezeigt, mit einem Stopfen verschlossen. Soll die Druckentlastung dagegen bei angesteuertem Wegeventil 170 erfolgen, ist die Verbindung mit dem Arbeitsanschluss (B) mit einem Stopfen verschlossen (nicht gezeigt). In beiden Fällen ist bei Schaltung auf Druckentlastung des Hydrosystems 18 die Druckkammer 164 des Vorsteuerventils 100, durch das Wegeventil 170 über eine Steuer-Tankleitung 178, zum Tank 22 entlastet. Die Tankleitung 178 kann z.B., wie in Figur 5 gezeigt, in die Ventilkammer 132 des Vorsteuerventils 100 münden, welche über die erste Steuerleitung 133 mit dem Tank 22 verbunden ist. Selbstverständlich könnte anstelle eines 4/2-Wegeventils auch ein 3/2-Wegeventil eingesetzt werden.

Auf den Ventilkolben 110 wirkt eine Kraft F in Richtung des Verschlusstopfens 114. Das Modul dieser Kraft ist F=p_{C}xA_{S} wobei p_{C} der durch die Druckeinstellfeder 106 vorgegebene Öffnungsdruck (respektiv der sich einstellende Steuerdruck) und A_{S} der freie Querschnitt des Ventilsitzes 140 ist. Diese Kraft steht, bei Schaltung auf Druckentlastung, zur Verfügung um den Ventilkolben 110 in Richtung des Verschlusstopfens 114 zu schieben. Das Steueröl aus der Druckkammer 164 wird dabei über die dritte Steuerleitung 158, das Wegeventil 170 und die Steuer-Tankleitung 178 in den Tank 22 gepresst. Die Bewegung des Ventilkolbens 110 ist hierbei sehr langsam, da die zur Verfügung stehende Kraft F in der Druckkammer 164 einen Druck bewirkt welcher um den Faktor k=A_{S}/A_{D}(k<1) kleiner als der Druck p_{C} ist, wobei A_{D} die Querschnittsfläche der Führungsbohrung 124 in der Ventilhülse 112 ist. Die Bewegungsgeschwindigkeit des Ventilkolbens 110 lässt sich zusätzlich durch eine in die Steuer-Tankleitung 178 eingesetzte Ablaufdüse 180 noch weiter verlangsamen.

Proportional zum zurückgelegten Weg des Ventilkolbens 110 in Richtung des Verschlusstopfens 114, entspannt sich die Druckeinstellfeder 106. Damit verringert sich der eingestellte Öffnungsdruck und somit der Steuerdruck in der Hauptsteuerkammer 16 des Druckbegrenzungsventils 10. Letzteres öffnet zur Entlastungsleitung 20, bleibt jedoch stets unter Kontrolle des Vortsteuerventils 100.

Die Öffnungsfeder 141 im Vorsteuerventil 100 gewährleistet, dass der Schliesskegel 104 einwandfrei vom Ventilsitz 140 abhebt und den Steuerölabfluss im Tank 22 zum vollständigen Abbau des Steuerdruckes in der Steuerkammer 16 freigibt. So wird das einwandfreie Abheben des Schliesskegels 104 von dem Ventilsitz 140 auch bei hohen Strömungskräften gewährleistet, welche wie gewusst in Schliessrichtung auf den Schliesskegel 104 wirken.

Der zeitliche Ablauf der Druckentlastung kann mit dem erfindungsgemässen Vorsteuerventil 100 gezielt beeinflusst, d.h. verlangsamt werden. In der gezeigten Ausführung ist der Untersetzungsfaktor k nämlich ungefähr gleich 1:15. Das heisst, dass der zur Verfügung stehende Druck in der Druckkammer 164 fünfzehnmal kleiner als der Steuerdruck p_{C} ist. Dadurch lassen sich mit Düsendurchmessern grösser als 0,6 bis 1 mm so langsame Entlastungszeiten einstellen, dass kein Druckentlastungsschlag mehr auftritt. Die Druckentlastung wird hierbei durch zeitlich gesteuertes Entspannen der Druckeinstellfeder 106, das heisst durch zeitlich gesteuerte Abnahme des vorgegebenen Drucksollwertes erreicht, ohne in die Druckregelfunktion des Hauptkolbens 12 der Hauptstufe einzugreifen.

Bei den bisher bekannten Ventilen im Schaltschema nach Figur 1 ist dies nicht der Fall. Beim Entlasten der unter Hochdruck stehenden Hauptsteuerkammer 16 wird, wie beschrieben, das Vorsteuerventil 24 über das Wegeventil 46 kurzgeschaltet. Die Öffnungsbewegung des Hauptkolbens 12 lässt sich durch die hohe wirksame Druckdifferenz an der Düse 50 in der Steuer-Tankleitung nur sehr begrenzt verlangsamen.

Ausser der kontrollierten Druckentlastung lässt sich mit dem erfindungsgemässen Vorsteuerventil 100 auch die Druckaufbauphase, durch eine in die Druckleitung 173 eingebaute Zulaufdüse 182, zeitlich beeinflussen. Der freie Querschnitt der Düse 182 bestimmt die Geschwindigkeit der Bewegung des Ventilkolbens 110 in Richtung seiner ersten axialen Endposition und damit die Druckaufbauzeit. Somit lassen sich, entsprechend den Erfordernissen, Druckentlastung und Druckaufbau unabhängig voneinander, jeweils über die Ablaufdüse 180 und die Zulaufdüse 182 zeitlich beeinflussen.

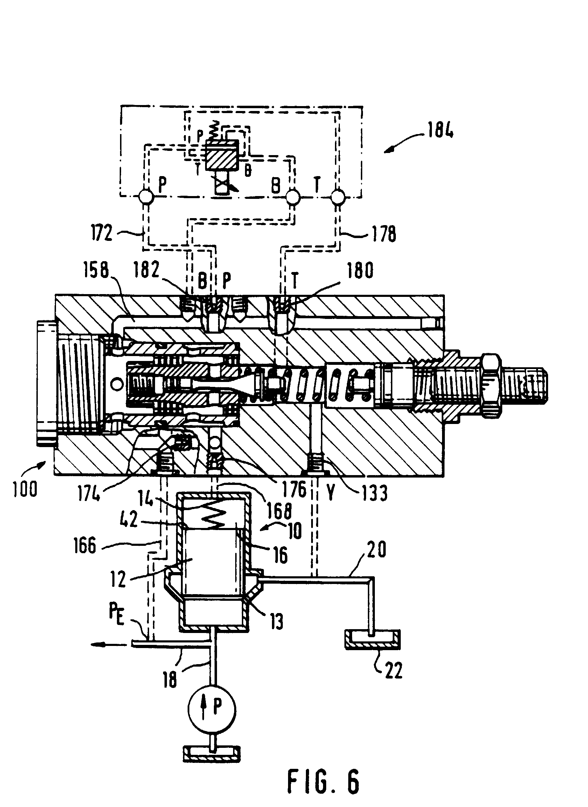

In der Anordnung nach Figur 6 ist das 4/2-Wegeventil 170 der Figur 5 durch ein proportionales Druckregelventil 184, mit drei Anschlüssen (B), (P) und (T), Proportional-Magnet und durch Federkraft definierten Ausgangsstellung ersetzt. Der (B)-Anschluss ist mit der dritten Steuerleitung 158 verbunden; der (P)-Anschluss ist mit der Steuer-Druckleitung 172 verbunden; und der (T)-Anschluss ist mit der Steuer-Tankleitung 178 verbunden. Der Druck im Anschluss (B) wird proportional zu einem Steuerstrom im Niederdruckbereich (d.h. normalerweise 0 bis 12 bar) eingeregelt. Mit dem proportional geregelten Niederdruck wird der Druckraum 164 des Vorsteuerventils 100 beaufschlagt. Durch ein Flächenverhältnis von zirka 15:1 zwischen der Führungsbohrung 124 für den Ventilkolben 110 und dem freien Querschnitt des Ventilsitzes 140 ergibt sich die notwendige Kraft um die Druckeinstellfeder 106, durch Verschieben des Ventilkolbens 110, proportional zum vorgeregelten Niederdruck in der Druckkammer 164 vorzuspannen. Es ergibt sich demnach ein durch die Druckeinstellfeder 106 proportional zum Steuerstrom 162 vorgegebener Steuerdruck, und ein sich entsprechend einregelnder Systemdruck p_{E} im Hydrosystem 18.

Der maximale Systemdruck lässt sich weiterhin manuell an der Einstellvorrichtung 108, unabhängig von einer Ansteuerelektronik des Druckregelventils 184 einstellen. Bei Übersteuerung durch Fehler in dieser Ansteuerelektronik kann immer nur der manuell an der Einstellvorrichtung 108 eingestellte Maximaldruck auftreten, da der Ventilkolben 110 auch bei stark überhöhtem Betätigungsdruck in der Druckkammer 164 nur bis Endanschlag gegen die Schulterfläche 122 fahren kann. Ein zusätzliches, manuell einstellbares Vorsteuerventil wie im Schema der Figur 2 entfällt daher, da diese Funktion in dem erfindungsgemässen Vorsteuerventil 100 schon in der Grundfunktion enthalten ist.

Im Vergleich zum bekannten Schema nach Figur 2, erreicht man mit dem erfindungsgmässen Vorsteuerventil 100, in der Schaltung nach Figur 6, eine verbesserte Ventilkennlinie (Q, p_{E},), mit einem wesentlich flacheren Anstiegsverlauf des Systemdrucks p_{E} mit anwachsendem Ventildurchfluss Q. Dieser Vorteil ist auf den etwa 10-fach grösseren freien Querschnitt des Ventilsitzes 140 des Vorsteuerventils 100, im Vergleich zu Vorsteuerventilen mit Proportional-Magneten zurückzuführen. Wirkt der Proportional-Magnet nämlich gleich auf den Schliesskegel, wie das z.B. beim Vorsteuerventil 52 nach Figur 2 der Fall ist, muss wegen der begrenzten Stellkraft des Proportional-Magneten der freie Querschnitt des Ventilsitzes sehr klein ausgelegt werden.

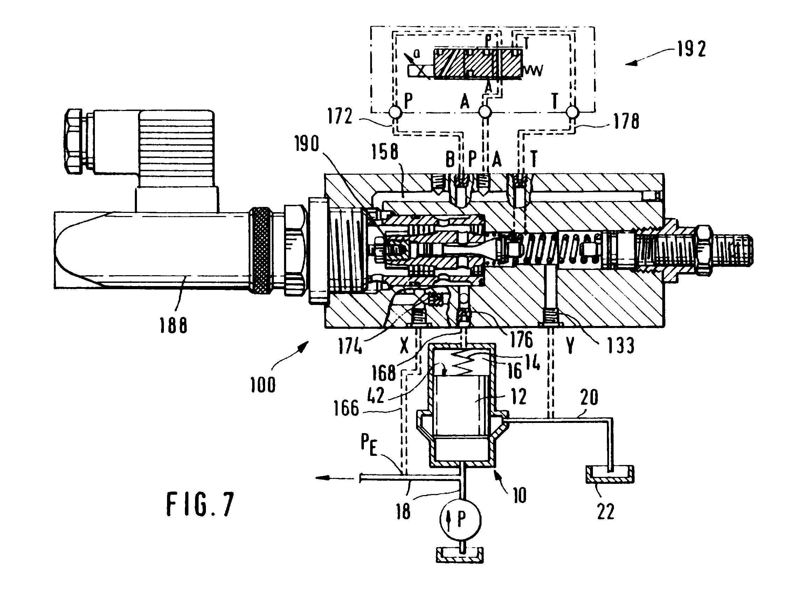

Eine weitere Anwendung des erfindungsgemässen Vorsteuerventils 100 in einem vorgesteuerten Proportional-Druckbegrenzungsventil ist in Figur 7 gezeigt. Der Verschlusstopfen 114 des Vorsteuerventils 100 ist durch einen Wegaufnehmer 188 ersetzt, welcher die genaue Position des Ventilkolbens 110 erfasst und ein dieser Position proportionales Ausgangssignal erzeugt. Es kann sich z.B. um einen druckdichten induktiven Wegaufnehmer handeln, der über einen Schraubstopfen 190 mit dem Ventilkolben 110 mechanisch verbunden ist.

Ein Proportional-Wegeventil 192 mit einem Proportional-Magneten ist mit einem (A)-Anschluss mit der zweiten Steuerleitung 156, mit einem (T)-Anschluss mit der Steuer-Tankleitung 178 und mit einem (P)-Anschluss mit der Steuer-Druckleitung 172 des Vorsteuerventils 100 verbunden. Die Position des Ventilkolbens 110 wird dabei in einem geschlossenen Positionsregelkreis proportional zu einem vorgesteuerten Sollwert eingeregelt. Dazu wird in bekannter Weise das Ausgangssignal des Wegaufnehmers 188 mit diesem Sollwert verglichen, und das proportionale Druckregelventil 192 entsprechend nachgeregelt. Die Vorspannung der Druckeinstellfeder 106 wird somit hochgenau und stufenlos, entsprechend dem vorgegebenen Sollwert eingestellt, und wie vorbeschrieben regelt sich der entsprechende Systemdruck p_{E} im Hydrosystem 18 ein. Mit einfachem Aufwand wird mit dem erfindungsgemässen Vorsteuerventil 100 ein elektrisch gesteuertes Proportional-Druckbegrenzungsventil mit hoher Einstellgenauigkeit verwirklicht.

## Patentansprüche

1. Vorsteuerstufe für Druckbegrenzungsventile umfassend
eine Ventilkammer (132) die mit einer ersten Steuerleitung (133) verbunden ist,
einen Ventilsitz (140),
ein Schliesselement (104) das formschlüssig in den Ventilsitz (140) einpassbar ist und in der Ventilkammer (132) axial verschiebbar ist, und
eine Druckeinstellfeder (106) die dem Schliesselement (104) derart zugeordnet ist, dass sie auf letzteres eine Schliesskraft in Richtung des Ventilsitzes(140) ausübt,
**gekennzeichnet durch**
einen axial verschiebbaren Ventilkolben (110) der die Ventilkammer (132) axial einseitig begrenzt und den Ventilsitz (140) darin ausbildet, wobei letzterer über einen Verbindungskanal (142, 144) durch den Ventilkolben (110) mit einer zweiten Steuerleitung (156) verbunden ist,
eine Druckkammer (164) die mit einer dritten Steuerleitung (158) verbunden ist und in welcher der Ventilkolben (110) eine Betätigungsfläche ausbildet die wesentlich grösser als der freie Querschnitt des Ventilsitzes (140) ist und die derart angeordnet ist, dass durch Druckbeaufschlagung dieser Druckkammer (164) eine hydrostatische Kraft auf den Ventilkolben ausgeübt wird die der Schliesskraft der Druckeinstellfeder (106) entgegengesetzt ist, und
einen Gehäuseanschlag (130) für den Ventilkolben (110) der eine erste axiale Endstellung des Ventilkolbens (110) in Richtung dieser hydrostatischen Kraft festlegt.

2. Vorsteuerstufe nach Anspruch 1, dadurch gekennzeichnet, dass das Schliesselement ein Schliesskegel (104) ist, der starr mit einem Dämpfungskolben (134) verbunden ist, welcher in einer Führungsbohrung (138) des Ventilkolbens (110) axial geführt ist.

3. Vorsteuerstufe nach Anspruch 1 oder 2, dadurch gekennzeichnet,
dass der Ventilkolben (110) in einer Führungsbohrung (124) einer Ventilhülse (112) verschiebbar angeordnet ist und einen ersten und zweiten in dieser Führungsbohrung axial abgedichteten Querschnittsbereich (148 und 150) aufweist, wobei zwischen den beiden Querschnittsbereichen (148 und 150) innerhalb der Führungsbohrung (124) eine innere Ringkammer (146) abgegrenzt wird, in welche der Verbindungskanal (142, 144) zum Ventilsitz (140) einmündet, und
dass über Verbindungsöffnungen (152) in der Ventilhülse (112) und eine äussere, die Ventilhülse (112) umgebende Ringkammer (154), die innere Ringkammer (146) mit der zweiten Steuerleitung (156) verbunden ist.

4. Vorsteuerstufe nach Anspruch 1, 2 oder 3, dadurch gekennzeichnet, dass sie als Zwischenplatte ausgeführt ist.

5. Vorgesteuertes von Hand einstellbares Druckbegrenzungsventil, mit einer Hauptstufe (10) welche einen ersten und zweiten Hauptstromanschluss und eine Steuerkammer (16) aufweist, wobei der erste Hauptstromanschluss mit einem Hydrosystem (18) verbunden ist, und der zweite Hauptstromanschluss über eine Entlastungsleitung (20) mit einem Tank (22) drucklos verbunden ist,
gekennzeichnet durch
eine Vorsteuerstufe (100) nach einem der Ansprüche 1 bis 4, mit einer manuellen Einstellvorrichtung (108) der Druckeinstellfeder (106), wobei der erste Steueranschluss (133) drucklos mit dem Tank (22) verbunden ist, und der zweite Steueranschluss (156) mit dem Hydrosystem (18) und der Steuerkammer (16) der Hauptstufe (10) verbunden ist, und
ein durch ein Steuersignal ansteuerbares Wegeventil (170), das mit der dritten Steuerleitung (158) verbunden ist und eine erste und zweite Schaltstellung aufweist, wobei in der ersten Schaltstellung die Druckkammer (164) des Vorsteuerventils (100), über das Wegeventil (170) und eine Steuer-Druckleitung (172), mit dem Druck im Hydrosystem (18) beaufschlagbar ist, und in der zweiten Schaltstellung die Druckkammer (164), über das Wegeventil (170) und eine Steuer-Tankleitung (178), drucklos mit dem Tank (22) verbindbar ist.

6. Vorgesteuertes von Hand einstellbares Druckbegrenzungsventil nach Anspruch 5, gekennzeichnet durch eine in die Steuer-Tankleitung (178), eingesetzte Ablaufdüse (180).

7. Vorgesteuertes von Hand einstellbares Druckbegrenzungsventil nach Anspruch 5 oder 6, gekennzeichnet durch eine in die Steuer-Druckleitung (172) eingesetzte Zulaufdüse (182).

8. Vorgesteuertes Proportional-Druckbegrenzungsventil, mit einer Hauptstufe (10), welche einen ersten und zweiten Hauptstromanschluss und eine Steuerkammer (16), aufweist, wobei der erste Hauptstromanschluss mit einem Hydrosystem (18), verbunden ist, und der zweite Hauptstromanschluss über eine Entlastungsleitung (20), mit einem Tank (22), drucklos verbunden ist,
gekennzeichnet durch
eine Vorsteuerstufe (100) nach einem der Ansprüche 1 bis 4, mit einer manuellen Einstellvorrichtung (108) der Druckeinstellfeder (106), wobei der erste Steueranschluss (133) drucklos mit dem Tank (22) verbunden ist und der zweite Steueranschluss (156) mit dem Hydrosystem (18) und der Steuerkammer der Hauptstufe verbunden ist, und
ein proportionales Druckregelventil (184,192) mit einem (P)-Anschluss, (T)-Anschluss, und (B)-Anschluss, wobei der (P)-Anschluss mittels einer Steuer-Druckleitung (172) mit dem Hydrosystem (18) verbunden ist, der (T)-Anschluss mittels einer Steuer-Tankleitung (178) mit dem Tank (22) verbunden ist, der (B)-Anschluss mit dem dritten Steueranschluss (158) der Vorsteuerstufe (100) verbunden ist, und somit die Druckkammer (164) der Vorsteuerstufe (100) mit einem zu einem Steuerstrom proportionalem Druck beaufschlagbar ist.

9. Vorgesteuertes Proportional-Druckbegrenzungsventil nach Anspruch 8 dadurch gekennzeichnet, dass die Vorsteuerstufe (100) mit einem Wegaufnehmer (188) für die Position des Ventilkolbens (110) ausgestattet ist, wobei diese Position des Ventilkolbens (110) in einem geschlossenen Positionsregelkreis proportional zu einem vorgegebenen Sollwertsignal eingestellt wird, und so die Vorspannung der Druckeinstellfeder (106) exakt eingeregelt wird.

## Claims

1. Pilot stage for pressure limiting valves comprising
a valve chamber (132), which is connected to a first control line (133),
a valve seat (140),
a closing element (104), which can be installed with a close fit in the valve seat (140) and is axially movable in the valve chamber (132), and
a pressure adjusting spring (106), which is assigned to the closing element (104) in such a way that it exerts on the latter a closing force in the direction of the valve seat (140),
**characterised by**
an axially movable valve piston (110), which limits the valve chamber (132) axially on one side and forms the valve seat (140) therein, the latter being connected via a connecting duct (142, 144) through the valve piston (110) to a second control line (156),
a pressure chamber (164), which is connected to a third control line (158) and in which the valve piston (110) forms an actuating surface which is substantially larger than the free cross-section of the valve seat (140) and is arranged in such a way that, as a result of pressure admission to this pressure chamber (164), a hydrostatic force acting against the closing force of the pressure adjusting spring (106) is exerted on the valve piston, and
a casing stop (130) for the valve piston (110), which determines a first axial end position of the valve piston (110) in the direction of this hydrostatic force.

2. Pilot stage according to claim 1, characterised in that the closing element is a closing cone (104), which is connected rigidly to a damping piston (134), which is guided axially in a guide hole (138) of the valve piston (110).

3. Pilot stage according to claim 1 or 2, characterised in
that the valve piston (110) is arranged movably in a guide hole (124) of a valve sleeve (112) and has a first and second cross-sectional area (148 and 150) axially sealed in this guide hole, an inner annular chamber (146), into which the connecting duct (142, 144) to the valve seat (140) leads, being delimited between the two cross-sectional areas (148 and 150) inside the guide hole (124), and
that the inner annular chamber (146) is connected to the second control line (156) via connection openings (152) in the valve sleeve (112) and an outer annular chamber (154) enclosing the valve sleeve (112).

4. Pilot stage according to claim 1, 2 or 3, characterised in that it is designed as an intermediate plate.

5. Piloted manually adjustable pressure limiting valve with a main stage (10), which has a first and second main flow connection and a control chamber (16), the first main flow connection being connected to a hydraulic system (18) and the second main flow connection being connected without pressure via a relief line (20) to a tank (22),
characterised by
a pilot stage (100) according to one of claims 1 to 4 with a manual adjusting device (108) of the pressure adjusting spring (106), the first control connection (133) being connected without pressure to the tank (22) and the second control connection (156) being connected to the hydraulic system (18) and the control chamber (16) of the main stage (10), and
a multi-way valve (170) controllable by a control signal, which is connected to the third control line (158) and has a first and second switch position, whereby the pressure chamber (164) of the pilot valve (100) can admit the pressure in the hydraulic system (18) via the multi-way valve (170) and a control pressure line (172) in the first switch position and the pressure chamber (164) can be connected to the tank (22) without pressure via the multi-way valve (170) and a control tank line (178) in the second switch position.

6. Piloted manually adjustable pressure limiting valve according to claim 5, characterised by a discharge nozzle (180) installed in the control tank line (178).

7. Piloted manually adjustable pressure limiting valve according to claim 5 or 6, characterised by a feed nozzle (182) installed in the control pressure line (172).

8. Piloted proportional pressure limiting valve with a main stage (10), which has a first and second main flow connection and a control chamber (16), the first main flow connection being connected to a hydraulic system (18) and the second main flow connection being connected without pressure via a relief line (20) to a tank (22), characterised by
a pilot stage (100) according to one of claims 1 to 4 with a manual adjusting device (108) of the pressure adjusting spring (106), the first control connection (133) being connected without pressure to the tank (22) and the second control connection (156) being connected to the hydraulic system (18) and the control chamber of the main stage, and
a proportional pressure control valve (184, 192) with a (P) connection, (T) connection and (B) connection, the (P) connection being connected by a control pressure line (172) to the hydraulic system (18), the (T) connection being connected by a control tank line (178) to the tank (22), the (B) connection being connected to the third control connection (158) of the pilot stage (100), and the pressure chamber (164) of the pilot stage (100) being thus able to admit a pressure proportional to a control flow.

9. Piloted proportional pressure limiting valve according to claim 8 characterised in that the pilot stage (100) is equipped with a position sensor (188) for the position of the valve piston (110), this position of the valve piston (110) being adjusted proportionally to a predetermined required value signal in a closed position control circuit and the pretension of the pressure adjusting spring (106) thus being accurately adjusted.

## Revendications

1. Etage de commande pour des limiteurs de pression comprenant
une chambre de soupape (132) qui est reliée à une première conduite de commande (133),
un siège de soupape (140),
un élément de fermeture (104) qui peut être ajusté par engagement dans le siège de soupape (140) et est déplaçable axialement dans la chambre de soupape (132), et
un ressort de réglage de pression (106), qui est associé à l'élément de fermeture (104) de telle sorte qu'il exerce sur ce dernier une force de fermeture dans le sens du siège de soupape (140),
**caractérisé par**
un piston de soupape déplaçable axialement (110) qui limite axialement d'un côté la chambre de soupape (132) et qui forme dans celle-ci le siège de soupape (140), ce dernier étant relié, par l'intermédiaire d'un canal de liaison (142,144) traversant le piston de soupape (110), à une deuxième conduite de commande (156),
une chambre de pression (164) qui est reliée à une troisième conduite de commande (158) et dans laquelle le piston de soupape (110) forme une surface d'actionnement qui est sensiblement plus grande que la section transversale libre du siège de soupape (140) et qui est disposée de telle manière que par mise sous pression de cette chambre de pression (164) une force hydrostatique est exercée sur le piston de soupape, qui est opposée à la force de fermeture du ressort de réglage de pression (106), et
une butée de boîtier (130) pour le piston de soupape (110) qui fixe une première fin de course axiale du piston de soupape (110) dans le sens de cette force hydrostatique.

2. Etage de commande selon la revendication 1, caractérisé en ce que l'élément de fermeture est un cône de fermeture (104) qui est relié de façon rigide à un piston d'amortissement (134), lequel est guidé axialement dans un alésage de guidage (138) du piston de soupape (110).

3. Etage de commande selon la revendication 1 ou 2, caractérisé en ce
que le piston de soupape (110) est disposé de façon déplaçable dans un alésage de guidage (124) d'un manchon de soupape (112) et présente une première et une deuxième zone de section transversale (148 et 150) rendues étanches axialement dans cet alésage de guidage, une chambre toroïdale interne (146) étant définie entre les deux zones de section transversale (148 et 150) à l'intérieur de l'alésage de guidage (124), ledit canal de liaison (142, 144) au siège de soupape (140) débouchant dans cette chambre toroïdale interne, et
en ce que la chambre toroïdale interne (146) est reliée à la deuxième conduite de commande (156) par l'intermédiaire d'ouvertures de liaison (152) situées dans le manchon de soupape (112) et d'une chambre toroïdale (154) externe, entourant le manchon de soupape (112).

4. Etage de commande selon la revendication 1, 2 ou 3, caractérisé en ce qu'il est réalisé comme plaque intermédiaire.

5. Limiteur de pression à commande, réglable à la main, comportant un étage principal (10) qui présente un premier et un deuxième raccord principal et une chambre de commande (16), le premier raccord principal étant relié à un système hydraulique (18), et le deuxième raccord principal étant relié sans pression à un réservoir (22) par une conduite de décharge (20), caractérisée par
un étage de commande (100) selon l'une des revendications 1 à 4, comportant un dispositif de réglage manuel (108) du ressort de réglage de pression (106), le premier raccordement de commande (133) étant relié sans pression au réservoir (22), et le deuxième raccordement de commande (156) étant relié au système hydraulique (18) et à la chambre de commande (16) de l'étage principal (10) et
un distributeur (170) pouvant être commandé par un signal de commande, qui est relié à la troisième conduite de commande (158) et présente une première et une deuxième position de commutation, dans la première position de commutation, la pression du système hydraulique pouvant être appliquée à la chambre de pression (164) de l'étage de commande (100), par l'intermédiaire du distributeur (170) et d'une conduite de commande "pression" (172), et dans la deuxième position de commutation la chambre de pression (164) pouvant être reliée par le distributeur (170) et une conduite de commande ,,réservoir" (178), sans pression au réservoir (22).

6. Limiteur de pression à commande, réglable à la main, selon la revendication 5, caractérisé par une tuyère d'écoulement (180) placée dans la conduite de réservoir de commande (178).

7. Limiteur de pression à commande, réglable à la main, selon la revendication 5 ou 6, caractérisé par une tuyère d'amenée (182) placée dans la conduite de pression de commande (172).

8. Limiteur de pression proportionnel à commande, comportant un étage principal (10), qui présente un premier et un deuxième raccord principal et une chambre de commande (16), le premier raccord principal étant relié à un système hydraulique (18) et le deuxième raccord principal étant relié sans pression à un réservoir (22) par une conduite de décharge (20), caractérisé par un étage de commande (100) selon l'une des revendications 1 à 4, comportant
un dispositif de réglage manuel (108) du ressort de réglage de pression (106), le premier raccordement de commande (133) étant relié sans pression au réservoir (22) et le deuxième raccordement de commande (156) étant relié au système hydraulique (18) et à la chambre de commande de l'étage principal, et
un régulateur de pression proportionnel (184,192) comportant un raccord (P), un raccord (T), et un raccord (B), le raccord (P) étant relié au système hydraulique (18) au moyen d'une conduite de commande ,,pression" (172), le raccord (T) étant relié au réservoir (22) au moyen d'une conduite de commande "réservoir" (178), le raccord (B) étant relié au troisième raccord de commande (158) de l'étage de commande (100), de sorte qu'une pression proportionnelle à un courant de commande puisse être appliquée à la chambre de pression (164) de l'étage de commande (100).

9. Limiteur de pression proportionnel à commande, selon la revendication 8, caractérisé en ce que l'étage de commande (100) est équipé d'un capteur de déplacement (188) pour la position du piston de soupape (110), cette position du piston de soupape (110) étant réglée dans un circuit de réglage du positionnement fermé proportionnellement à un signal de consigne prédéfini, de sorte que la tension initiale du ressort de réglage de pression (106) soit préréglée de façon précise.
